# EUROPEAN PATENT SPECIFICATION

(11) **EP 1 653 069 B1**
(45) Date of publication and mention of the grant of the patent: **21.03.2018**
(21) Application number: 04025372.6
(22) Date of filing: 26.10.2004
(51) Int. Cl.: F02D 41/40

(54) **Method and combustion system for improving combustion characteristics for a direct injected compression ignition engine**
Methode und Verbrennungsystem für das Verbessern der Verbrennungeigenschaften für eine Diesel Brennkraftmaschine mit direkter Einspritzung
Méthode et système de combustion pour améliorer des caractéristiques de combustion pour un moteur d'injection directe à diesel

(43) Date of publication of application: 03.05.2006
(73) Proprietor: Volvo Car Corporation, 405 31 Göteborg (SE)
(72) Inventor: Acke, Filip, 421 61 Göteborg (SE); Andersson, Arne, 435 42 Mölnlycke (SE); Blomkvist, Gisela, 416 62 Göteborg (SE)
(74) Representative: Zacco Sweden AB

(56) References cited:
- EP-A- 0 826 869
- EP-A- 0 915 244
- EP-A- 1 348 857
- EP-A1- 0 621 400
- WO-A1-01/23718
- WO-A1-99/30024
- US-A- 4 446 830
- US-A1- 2002 007 816

## Description

### FIELD OF THE INVENTION

The present invention relates to a method according to the preamble of independent claim 1 and to a combustion system according to the preamble of independent claim 5.

### PRIOR ART

As a reaction to legislation demands regarding exhaust emissions from automobiles, buses, trucks and other transport means, there has evolved a growing need for exhaust aftertreatment systems for the combustion engines powering most transport means.

There is however a large difference between different engine types; generally, it could be said that it is much easier to use exhaust after treatment systems on gasoline engines; on gasoline engines, it is usually possible to use a three way catalyst, TWC, in order to reduce emissions of the legislated emissions, namely unburned hydrocarbons (uHC), carbon monoxide (CO) and nitrogen oxides (NOx).

On diesel (Cl) engines, it is however much more difficult to reduce the legislated emissions, especially NOx, mainly due to the presence of oxygen in the exhaust gases. Presently, the most promising solution for NOx emission reduction seems to be the use of a "NOx-storage" catalyst, which stores NOx during lean engine operation The stored NOx is then removed from the catalyst by means of running the engine with a surplus of fuel (compared to the amount of oxygen present for the combustion) for a limited amount of time. The fuel rich combustion will produce large amounts of CO and uHC, which will react with the NOx stored in the catalyst and form nitrogen gas (N2), carbon dioxide (CO2) and water. This process is often referred to as catalyst regeneration.

There are however some severe problems with running a CI engine with a surplus of fuel in order to produce CO-rich emissions; firstly, the engine torque will increase as a result of the increased amount of fuel injected in the engine cylinders; secondly, increased cylinder wall fuel wetting will result from the fuel injections during in-cylinder conditions with low cylinder pressures; thirdly, increased soot formation will result from the combustion. The fuel wetting the cylinder walls will dissolve in the oil covering the cylinder wall, and eventually end up in the engine sump and dilute the oil. The soot formation leads to lung diseases and smog formation, mainly in urban areas

A well known way to reduce wall wetting, and generally improve the combustion characteristics in a DI diesel engine is to use a "swirling" air flow in the cylinder, i.e. a flow that revolves around the centreline of the cylinder. There are however at least two drawbacks with using a large amount of swirl, namely that the air drag in the induction system of the engine increases, which results in larger pumping losses and lower engine power and efficiency. Moreover, the heat transfer from the hot combustion gases to the cylinder walls increases with increasing swirl ratio ("amount of swirl"), which further reduces engine power and efficiency.

US-A-4 446 830 discloses a method for reducing wall wetting in a direct injected diesel engine. The method comprises the step of injecting a small amount of fuel shortly after gas exchange Top Dead Center (TDC), and thereafter injecting a large amount of fuel during the latter part of the compression stroke. This strategy has very little to do with avoiding wall wetting during catalyst regeneration; it is more a strategy for enabling use of low volatility fuel, since the early injected fuel will autoignite in the cylinder during compression and hence increase the gas temperature, which in turn will allow use of a low volatility fuel.

US-A-6 725 829 describes a "combustion control apparatus" for a diesel engine. According to this publication, the diesel injection is divided into several small injections, together with some kind of device for increasing swirl, in order to improve fuel economy. There is no mention in the patent publication that this strategy can be used in combination with a NOx storage catalyst, or for injections taking part during the expansion stroke, or for an engine comprising an induction system enabling control of the swirl amount.

Lastly, JP-A-10 317 936 describes an oil dilution suppressor, that is intended to minimize oil dilution by varying fuel injection timing and valve timing. This patent also fails to teach various fuel injection strategies combined with a NOx storage catalyst, fuel injections during the expansion stroke, or an engine comprising an induction system enabling control of the swirl amount. Another example of a system to regenerate a catalyst is shown in EP-0621400.

### SUMMARY OF THE INVENTION

The problem to be solved by the present invention is that increased fuel wall wetting and soot formation results from running a prior art CI engine under conditions that produce emissions of carbon monoxide, CO and unburned hydrocarbons, uHC, at high exhaust temperature, which is required for NOx catalyst regeneration.

The present invention solves these problems by a method characterised by the consecutive steps of:
activating means for controlling swirl ratio; and
controlling the controllable fuel injection system to inject at least two fuel injections during an expansion stroke of an engine cylinder.

The present invention also solves these problems by a combustion system characterised by the combination of activating swirl increasing means of the controllable induction system and simultaneously inject at least two fuel amounts during an expansion stroke of an engine cylinder.

A major advantage and effect of the present invention is that the latter of the at least two fuel injections injected during the expansion stroke will be injected into "virgin" air, i.e. air whose oxygen content has not yet been consumed by the preceding fuel injection. This will decrease the penetration length and facilitate the mixing of fuel and air for the latter fuel injection. As a result, fuel wall wetting and soot formation will decrease.

In some cases, preferably where the exhaust temperature is low, it might be beneficial to gradually increase the amount of fuel injected by the at least two injections, since this will increase the exhaust temperature to a temperature sufficient for catalyst regeneration without increasing CO an HC emissions during the warm-up period.

### BRIEF DESCRIPTION OF DRAWINGS

In the following, the invention will be described with reference to the appended drawings, wherein
Fig 1 is a schematic view showing a combustion system usable for the present invention,
Fig 2 is a schematic diagram showing an injection strategy usable in connection with the present invention, and
Fig 3 is a schematic view showing the effect of a combination of a pulsating injection scheme and a large amount of swirl.

### DESCRIPTION OF A PREFERRED EMBODIMENT

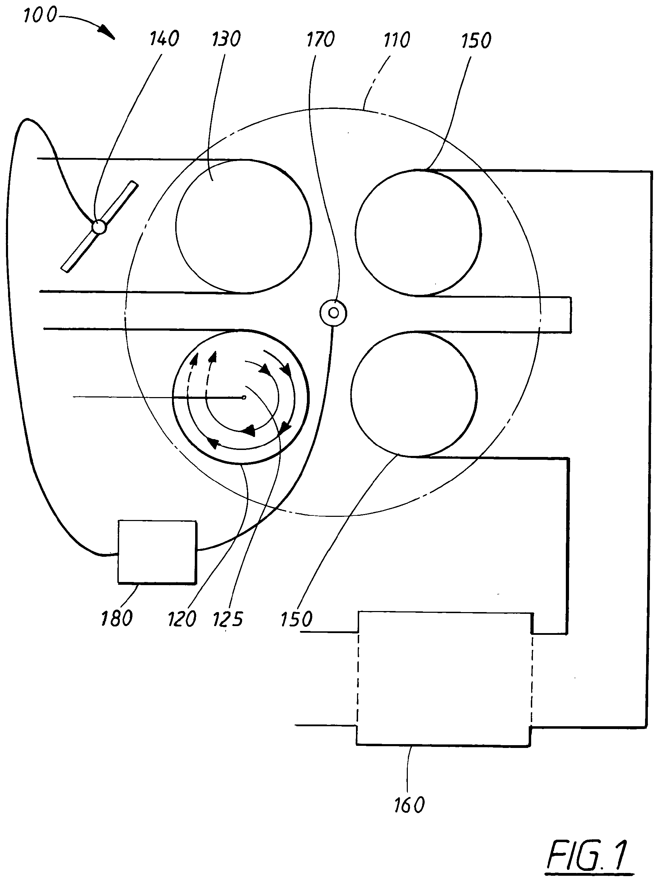

Fig 1 shows a combustion system 100 for a DI diesel engine (not shown). The combustion system 100 comprises an engine cylinder 110 fitted with two air inlet valves 120 and 130. The air inlet valve 120 is connected to the atmosphere by a swirl increasing flow controlling means 125, in this case a helically shaped induction channel. The air inlet valve 130 is connected to the atmosphere, which connection could be fully or partially interrupted by a swirl throttle 140. Further, the engine cylinder comprises two exhaust valves 150 and 150', opening to the atmosphere through a NOx storage catalyst 160. In most cases, a turbocharger (not shown) is also connected to the exhaust valves 150 and 150', the function of which being well known to people skilled in the art. The combustion system 100 also comprises a controllable fuel injector 170, which is connected to some kind of fuel supply (in most cases a high pressure fuel pump capable of delivering pressures of 1000 - 2000 bar (not shown)) and an engine controller 180, which also controls the swirl throttle 140. The controllable fuel injector 170 is preferably fitted in the centre of the cylinder, and is surrounded by the inlet valves 120 and 125 and the exhaust valves 150 and 150'. As is well known by people skilled in the art, an engine comprises a multitude of components not being mentioned above, for example pistons, crankshaft, camshafts, generator, crank motor and so on. The basic design of an engine is however so well known by people skilled in the art that no further explanation of basic engine components will be given here.

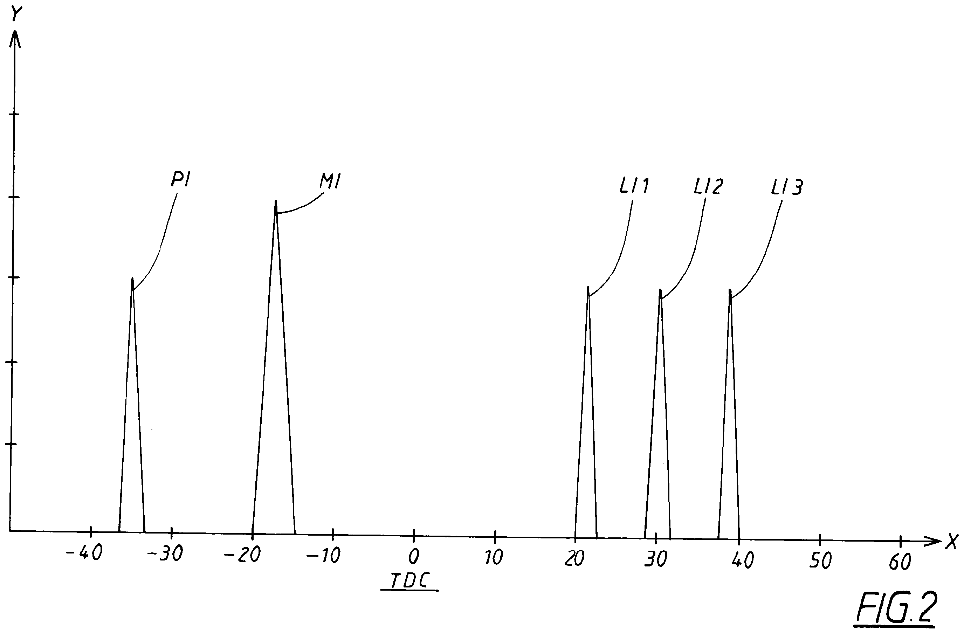

Figure 2 shows an exemplary fuel injection scheme for a combustion system according to the invention. A fuel injection rate shown at the Y-axis as a function of crank angle degree (CAD) on the X-axis exhibits five different fuel injections; first, a pilot fuel injection PI at about 35 CAD before top dead center (TDC), then a main fuel injection MI at about 15-20 CAD before TDC and finally three late injections LI1, LI2 and LI3 at about 20-40 CAD after TDC. As is well known by people skilled in the art, the term TDC refers to a CAD position where the piston is at its highest position.

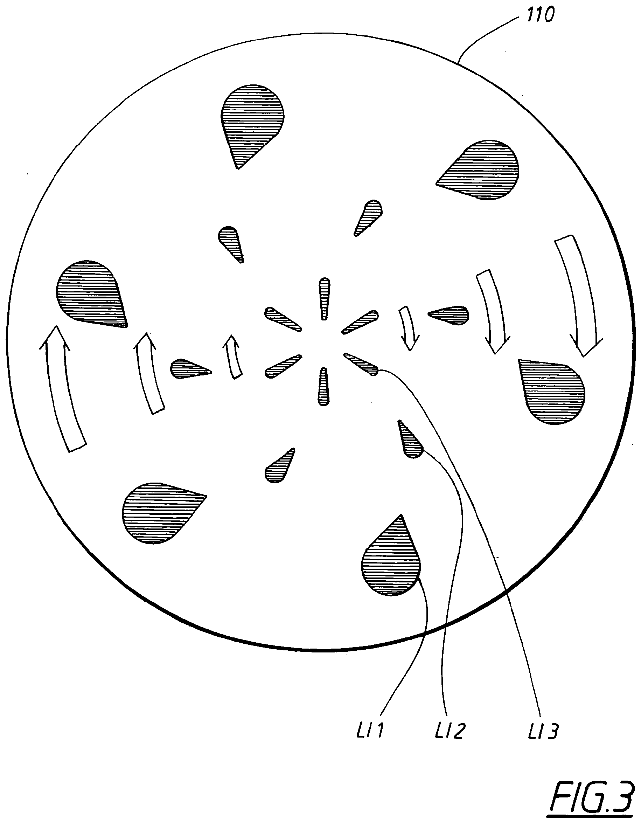

Fig 3, finally, shows the basic idea with the present invention, namely the use of three late injections LI1, LI2 and LI3 combined with a powerful swirl, indicated by arrows A. Injection "clouds" (denoted in fig 3 by their associated late injection LI1, LI2 and LI3), i.e. fuel droplets/fuel mist/combustion gases from the three consecutive late injections LI1, LI2 and LI3, are shown. As is apparent in fig 3, the fuel clouds emanate from an injector 170 comprising six injector orifices. As is obvious, injectors comprising a different number of injector orifices can be used, e.g. 2, 3, 4, 5, 7, 8, 9 or more injector holes, and still, the same effect can be achieved, namely that the swirling air flow "grabs" the fuel cloud from an earlier late injection LI and moves that fuel cloud sideways so that the next late injection LI is injected into "virgin air", i.e. air not containing fuel droplets/fuel mist/combustion gases from the preceding late injection LI.

Hereinafter, the function of the above components will be described with reference to the above components.

During normal engine operation, i.e. engine operation without catalyst regeneration, the combustion system 100 runs with only two fuel injections from the injector 170, namely the pilot injection PI and the main injection MI. The largest portion on the engine's power emanates from the main injection MI, and the pilot injection's effect is to reduce the effect of ignition delay, which can give a loud, annoying noise because of rapid combustion (before the implementation of pilot injections, this noise was referred to as "diesel noise"). The swirl throttle 140 is preferably in the open position, which, as is well understood by persons skilled in the art, will give less air swirl in the engine cylinder 110, compared to the case where the swirl throttle 140 is closed. Further, more air will enter the cylinder, which means that the combustion system will work with a surplus of oxygen, i.e. more air (and hence oxygen) than is consumed by the fuel during combustion will enter the cylinder. Still further, a larger than necessary amount of swirl will result in increased heat losses due to increased heat transfer from the combustion gases to the walls enclosing the combustion chamber. As mentioned, heat transfer from the combustion gases to the cylinder wall will decrease engine efficiency. During normal engine operation, the combustion exhausts leaving the cylinder 110 through the exhaust valves 150, 150' will include small amounts of unburned hydrocarbons (HC), carbon monoxide (CO) and relatively large amounts of nitrogen oxide (NOx) and oxygen (02). As shown in Fig 1, the exhaust will pass the NOx storage catalyst 160 before entering the atmosphere. There, NOx in the exhausts will get stuck on a catalytic coating on the internal surfaces of the NOx storage catalyst 160.

As can be understood, the internal surfaces of the NOx storage catalyst can not hold an infinite amount of NOx; hence, the catalyst 160 needs to be "regenerated" after a certain time of normal engine operation. For the regeneration, it is necessary to supply the catalyst 160 with exhausts that are rich on HC and CO and very low on 02. Further, the exhaust gas temperature must be sufficiently high (on the order of 600° C). By supplying exhaust gases having the mentioned properties to the NOx storage catalyst, the NOx stored on the internal catalyst surfaces will react with the CO and the HC in the exhausts and form water (H2O), carbon dioxide (CO2) and nitrogen gas (N2), all of which being considered as harmless to the environment.

The above described exhaust conditions are quite easy to achieve during full load operation of the engine; at full load operation, most of the oxygen trapped in the cylinder during combustion is consumed, so one only needs to inject a small amount of extra fuel in order to achieve the necessary exhaust conditions. The problem is however that full load operation for the time spans necessary for regeneration is very rare; hence, another way of achieving such conditions, also for low or medium engine loads, must be achieved.

According to the invention, the desired exhaust composition (and temperature) is achieved by a combustion system combining an induction system giving a controllable amount of swirl, and a number of late fuel injections LI1-LI3. The combustion system 100 is usable on low and medium loads; for catalyst regenerations at such engine loads, the engine controller 180 closes the swirl valve 140, and controls the injector 170 to inject, in addition to the pilot injection and the main injection MI, a multitude of late injections LI1 to LI3 into the swirling cylinder content. Medium and low load condition regeneration is made possible by a number of cooperating phenomena;
1. Controlling the induction system for giving more swirl inevitably leads to less air entering the engine. Consequently, less fuel is needed to consume all oxygen present in the cylinder. Further, less air entering the engine leads to pumping losses, which decreases the engine output.
2. Injection timing - by changing the fuel injection timing from the main injection to late injection, more fuel can be injected into the cylinder without increasing engine output. Simultaneously, late injection leads to a higher exhaust gas temperature, which, as mentioned, is desired for catalyst regeneration.
3. Mixing - the fact that each late injection LI1 to LI3 is injected into "virgin" air due to the movement of the swirling air flow in the cylinder improves mixing, which is crucial in order to avoid "overrich" zones, i.e. zones containing so much fuel that no further combustion can take place. Overrich zones will lead to increased cylinder wall fuel wetting and hence engine oil dilution (as is well known by persons skilled in the art, fuel deposited on the cylinder wall will mix with the oil covering the cylinder wall - eventually, the fuel will end up in the oil sump, diluting the engine oil and deteriorating oil properties).

Above, the invention has been described by an example of a preferred embodiment. It is however possible to make significant variations on the components described above without departing from the invention, that is defined in the appended claims.

For example, only operation of one cylinder has been described. It is however to be understood that an engine employing the combustion system or method according to the present invention can comprise a number of cylinders; common numbers of cylinders in an automotive application is, except from single cylinder engines, that are quite rare, 2, 3, 4, 5, 6, 8, 10, or 12 cylinders, depending on the desired power and smoothness of the engine. Further, it has not been discussed for how long the regeneration system is to be run in "regeneration mode", i.e. with increased swirl ratio and multiple late injections LI1 to LI3; this will depend on engine and catalyst design. Generally, it could be said that a large mass of the exhaust system leading from the engine cylinder 110 to the catalyst 160 will require a longer regeneration time; in some cases, it might be advantageous to start a regeneration scheme with a "semi-lean" combustion, i.e. run the engine with a closed swirl throttle 140 and only inject enough fuel during the late injections to almost consume all fuel trapped in the cylinder. This will increase the temperature significantly, but will not give large amount of uHC and CO in the emissions. After a while, when the exhaust system and the catalyst is hot enough, the amount of fuel injected in the late injection is increased to give uHC and CO rich exhaust gases for the catalyst regeneration.

## Claims

1. A method for regeneration of a nitrogen oxide storage catalyst (160) for a direct injected compression ignition engine comprising a controllable fuel injection system (170) and means (120, 125, 130, 140) for controlling swirl ratio,**characterised by** the consecutive steps of:
activating the means (120, 125, 130, 140) for controlling swirl ratio; and
controlling the controllable fuel injection system (170) to inject at least two fuel injections during an expansion stroke of an engine cylinder, wherein the fuel from the former of said injections is substantially moved away by said swirl before the latter injection is effected.

2. The method according to claim 1, wherein the controllable fuel injection system (170) are controlled to gradually increase the amount of fuel injected by the late injections, until complete catalyst (160) regeneration has been achieved.

3. The method according to claim 1 or 2, wherein the at least two fuel injections during the expansion stroke are of equal size.

4. The method according to any of the preceding claims, wherein the swirl increasing means (120, 125, 140) comprises a helically shaped induction channel.

5. A combustion system (100) for storage catalyst (160) regeneration for a direct injected compression ignition engine comprising a controllable induction system (120, 125, 130, 140) and a controllable fuel injection system (170), **characterised by** the combination of activating swirl increasing means of the controllable induction (120, 125, 130, 140) system and simultaneously inject at least two fuel amounts (LI1-LI3) during an expansion stroke of an engine cylinder (110), wherein said fuel injection system is controlled so that the fuel from the former of said injections is substantially moved away by said swirl before the latter injection is effected.

## Patentansprüche

1. Verfahren zur Regenerierung eines Stickoxid-Speicherkatalysators (160) für einen Verbrennungsmotor mit Direkteinspritzung umfassend ein steuerbares Kraftstoffeinspritzsystem (170) und Mittel (120, 125, 130, 140) zur Steuerung des Wirbelverhältnisses, **gekennzeichnet durch** die aufeinanderfolgenden Schritte:
Aktivieren der Mittel (120, 125, 130, 140) zur Steuerung des Wirbelverhältnisses; und
Steuern des steuerbaren Kraftstoffeinspritzsystems (170) zur Einspritzung von mindestens zwei Kraftstoffeinspritzungen während eines Expansionshubs eines Motorzylinders, wobei der Kraftstoff von der vorherigen Einspritzung durch den Wirbel im Wesentlichen wegbewegt wird, ehe die letztere Einspritzung durchgeführt wird.

2. Verfahren nach Anspruch 1, wobei das steuerbare Kraftstoffeinspritzsystem (170) gesteuert wird, um stufenweise die Menge an von den späteren Einspritzungen eingespritztem Kraftstoff zu erhöhen, bis die volle Katalysator (160) -Regenerierung erreicht worden ist.

3. Verfahren nach Anspruch 1 oder 2, wobei die mindestens zwei Kraftstoffeinspritzungen während des Expansionshubs die gleiche Größe aufweisen.

4. Verfahren nach einem der vorgehenden Ansprüche, wobei das Wirbelerhöhungsmittel (120, 125, 140) einen spiralförmigen Induktionskanal umfasst.

5. Verbrennungssystem (100) zur Speicherkatalysator (160) -Regenerierung für einen Verbrennungsmotor mit Direkteinspritzung umfassend ein steuerbares Induktionssystem (120, 125, 130, 140) und ein steuerbares Kraftstoffeinspritzsystem (170), **gekennzeichnet durch** die Kombination von Aktivierung von Wirbelerhöhungsmitteln des steuerbaren Induktionssystems (120, 125, 130, 140) und gleichzeitiger Einspritzung von mindestens zwei Kraftstoffmengen (LI1-LI3) während eines Expansionshubs eines Motorzylinders (110), wobei das Kraftstoffeinspritzsystem so gesteuert wird, dass der Kraftstoff von der vorherigen Einspritzung durch den Wirbel im Wesentlichen wegbewegt wird, ehe die letztere Einspritzung durchgeführt wird.

## Revendications

1. Procédé de régénération d'un catalyseur de stockage d'oxyde d'azote (160) pour un moteur à injection directe et injection comprimée comprenant un système d'injection de carburant contrôlable (170) et des moyens (120, 125, 130, 140) pour contrôler le rapport de tourbillon, **caractérisé par** les étapes consécutives consistant à :
activer les moyens (120, 125, 130, 140) pour contrôler le rapport de tourbillon ; et
commander le système d'injection de carburant contrôlable (170) pour injecter au moins deux injections de carburant pendant une course de détente d'un cylindre de moteur, dans lequel le carburant provenant de la première desdites injections est essentiellement éloignée par ledit tourbillon avant que la dernière injection ne soit effectuée.

2. Procédé selon la revendication 1, dans lequel le système d'injection de carburant contrôlable (170) est commandé pour augmenter progressivement la quantité de carburant injectée par les dernières injections jusqu'à ce que la régénération complète du catalyseur (160) ait été réalisée.

3. Procédé selon la revendication 1 ou 2, dans lequel les au moins deux injections de carburant pendant la course de détente sont de taille égale.

4. Procédé selon l'une quelconque des revendications précédentes, dans lequel le moyen d'augmentation de tourbillon (120, 125, 140) comprend un canal d'induction de forme hélicoïdale.

5. Système de combustion (100) pour régénération de catalyseur de stockage (160) pour un moteur à injection directe et injection comprimée comprenant un système d'induction contrôlable (120, 125, 130, 140) et un système d'injection de carburant contrôlable (170), **caractérisé par** la combinaison de l'activation de moyens d'augmentation de tourbillonnement du système d'induction contrôlable (120, 125, 130, 140) et l'injection simultanée d'au moins deux quantités de carburant (LI1-LI3) lors d'une course de détente d'un cylindre de moteur (110), dans lequel ledit système d'injection de carburant est commandé d'une telle manière que le carburant provenant de la première desdites injections est essentiellement éloignée par ledit tourbillon avant que la dernière injection ne soit effectuée.
